# EUROPEAN PATENT SPECIFICATION

(11) **EP 1 666 243 B1**
(45) Date of publication and mention of the grant of the patent: **25.03.2009**
(21) Application number: 05257299.7
(22) Date of filing: 28.11.2005
(51) Int. Cl.: B32B 27/08, B65D 75/00

(54) **Patch bag and barrier bag**
Beutel mit Schutzauflage und Barrierebeutel
Sac renforcé localement avec pièce protectrice et sac barrière

(30) Priority: 01.12.2004 US 632095 P; 22.03.2005 US 86105
(43) Date of publication of application: 07.06.2006
(73) Proprietor: Cryovac, Inc., Duncan, SC 29334-0464 (US)
(72) Inventor: Dawe, Matthew D., Simpsonville South Carolina 29681 (US); Broadus, Michael, Mauldin South Carolina 29662 (US); Mossbrook, Mendy W., Woodruff South Carolina 29388 (US)
(74) Representative: Jackson, Martin Peter

(56) References cited:
- US-A- 5 112 674
- US-A1- 2004 043 167
- US-B1- 6 287 613

## Description

### Field Of The Invention

The present invention relates to a solid state oriented, heat shrinkable thermoplastic film used as a patch on a patch bag; and to a solid state oriented, heat shrinkable thermoplastic film made into a bag.

### Background Of The Invention

Patch bags and barrier bags are known in the art. These materials offer relatively high free shrink, and are suitable for packaging many food and non-food articles. Patch bags and barrier bags are supplied commercially by Cryovac, Inc..

The present invention in some embodiments is a patch for a patch bag, or a barrier bag, with good abuse resistance.

### Summary Of The Invention

The present invention relates to a patch bag according to claim 1 and a patch bag according to claim 2 and a patch bag according to claim 3.

In a first aspect, a patch bag comprises a patch comprising a multllayer solid state oriented heat shrinkable film comprising an internal layer comprising a styrene/butadiene/styrene block copolymer, and a first and second outer layer each comprising an olefinic polymer, wherein the film has a free shrink (ASTM D 2732) of at least 5% at 85°C (185°F) in at least one of the longitudinal and transverse directions; and a bag having an outer surface, the bag comprising an internal layer comprising an oxygen barrier having an oxygen transmission rate of no more than 100 cc/m²/24hr at 25°C, 0% RH, 1 atm (ASTM D 3985), and a first and second outer layer each comprising an olefinic polymer, wherein the patch is adhered to the outer surface of the bag.

In an second aspect, a method for making a patch bag comprises providing a patch comprising a multilayer solid state oriented heat shrinkable film comprising an inter nal layer comprising a styrene/butadlene/styrene block copolymer, and a first and second outer layer each comprising an olefinic polymer, wherein the film has a free shrink (ASTM D 2732) of at least 5% at 85°C (185°F) in at least one of the longitudinal and transverse directions; providing a bag having an outer surface, the bag comprising an internal layer comprising an oxygen barrier having an oxygen transmission rate of no more than 100 cc/m²/24hr at 25°C, 0% RH, 1 atm (ASTM D 3985), and a first and second outer layer each comprising an olefinic polymer, and adhering the patch to the outer surface of the bag.

In a third aspect, a multilayer solid-state oriented heat shrinkable bag comprises a first internal layer comprising an oxygen barrier having an oxygen transmission rate of no more than 100 cc/m²/24hr at 25°C, 0% RH, 1 atm (ASTM D 3985); a second lntemal layer comprising a styrene/butadiene/styrene block copolymer; and a first and second outer layer each comprising an olefinic polymer, wherein the bag has a free shrink (ASTM D 2732) of at least 5% at 85°C (185°F) in at least one of the longitudinal and transverse directions.

In a fourth aspect, a method for making a bag comprises extruding a substrate comprising a first layer comprising an olefinic polymer, irradiating the substrate; extrusion coating onto the irradiated substrate a layer comprising an oxygen barrier having an oxygen transmission rate of no more than 100 cc/m²/24hr at 25°C, 0% RH, 1 atm (ASTM D 3985), a.layer comprising a styrene/butadiene/styrene block,copolymer, and a layer comprising an olefinic polymer; heating the resulting sheet of film to its orientation temperature; and orienting the heated sheet of film to produce a heat shrinkable bag, the bag having a free shrink (ASTM D 2732) of at least 5% at 85°C (185°F) in at least one of the longitudinal and transverse directlons,

In any of the above-disclosed methods, or the methods disclosed throughout this specification, the quenched extruded sheet of film can optionally be crosslinked, by e.g, e-beam irradiation or chemical crosslinking, before or after the reheating step.

The reheated sheet of film can be monoaxially or biaxially oriented by e.g. trapped bubble orientation or tenter frame orientation.

### Definitions

"Adhered" herein refers to the adhesion of one layer to another, or adhesion of a patch to a bag, with or without a tie layer, adhesive, or other layer therebetween. A patch can be adhered to a bag by adhesive lamination, e.g. by the application of a polyurethane or other adhesive; by corona treatment of surfaces of the patch and/or bag that will be brought Into adhering contact; or by any other suitable method.

"Alpha-olefin" herein refers to olefinic compounds, whether unsubstituted or substituted, in which the first two carbon atoms in the chain have a double bond therebetween. Examples include ethylene, propylene, butene, hexene, and octene.

"Bag" herein refers to e.g. L-seal bags, side-seal bags, backseamed bags, end-seal bags, and pouches. An L-seal bag has an open top, a bottom seal, one side-seal along a first side edge, and a seamless (i.e., folded, unsealed) second side edge. A side-seal bag has an open top, a seamless bottom edge, with each of its two side edges having a seal therealong. Although seals along the side and/or bottom edges can be at the very edge itself, (i.e., seals of a type commonly referred to as "trim seals"), the seals can also be spaced inward (e.g. 6-13 mm (1/4 to 1/2 inch)) from the bag side edges, and can be made using a impulse-type heat sealing apparatus, which utilizes a bar which is quickly heated and then quickly cooled. An end-seal bag has an open top, and a seal along its bottom edge, with each of its two side edges being seamless folds formed by the folds of the tube from which it was formed . A backseamed bag is a bag having an open top, a seal running the length of the bag in which the bag film is either fin-sealed or lap-sealed, two seamless side edges, and a bottom seal along a bottom edge of the bag.

"Ex." herein refers to an example of the invention.

"Ethylene/alpha-olefin copolymer" (EAO) herein refers to a copolymer of ethylene with one, or more aliphatic comonomers selected from C₃ to C₁₀ alpha-olefins such as propene, butene-1,hexene-1, octene-1, etc. in which the molecules of the copolymers assemble as long polymer chains with relatively few short chain branches arising from the alpha-olefin which was reacted with ethylene. This molecular structure is to be contrasted with conventional high pressure low density (LDPE) or medium density polyethylenes which are highly branched homopolymers and contain both long chain and short chain branches. EAO includes such heterogeneous materials as linear medium density polyethylene (LMDPE), linear low density polyethylene (LLDPE), and very low and ultra low density polyethylene (VLDPE and ULDPE), such as DOWLEX™ or ATTANE™ resins supplied by Dow, and ESCORENE™ resins supplied by Exxon.

Free Shrink values herein are in accordance with ASTM D 2732.

Haze values herein are in accordance with ASTM D 1003,

"Homogeneous ethylene/alpha olefin copolymer" (HEAO) herein refers polymerization reaction products of narrow molecular weight distribution (M_{w}/Mₙ less than 3) and narrow composition distribution, referred to as to single-site polymerized polymers. These include linear homogeneous ethylene/alpha olefin copolymers (linHEAO) such as TAFMER™ resins supplied by Mitsui Petrochemical Corporation, EXACT™ resins supplied by Exxon, as well as long chain branched (lcbHEAO) AFFINITY™ resins supplied by the Dow Chemical Company, or ENGAGE™ resins supplied by DuPont Dow Elastomers. Homogeneous EAO copolymers may be polymerized using vanadium catalysts, as in the case of the TAFMER™ products, or may employ a metallacene catalyst as in the case of the more recent EXACT™ or AFFINITY™ products.

"Heterogeneous" polymers herein refers to polymerization reaction products of relatively broad molecular weight and relatively wide composition distribution, such as very low density polyethylene (VLDPE), ultra low density polyethylene (ULDPE), and linear low density polyethylene (LLDPE).

"lntermediate" herein refers to a layer of a multi-layer film which is between an outer layer and an internal layer of the film.

"Internal" herein refers to a layer of a multilayer film, patch, or bag that is not an outermost layer of the film, patch, or bag; i.e. an internal layer is located between two other layers of the film, patch, or bag structure.

"Lamination", "laminated sheet", and the like refer herein to the process, and resulting product, made by bonding together two or more layers of film or other materials. Lamination can be accomplished by joining layers with adhesives, joining with heat and pressure, and even spread coating and extrusion coating. The term laminate as used herein is also inclusive of coextruded multilayer films comprising one or more tie layers.

"L" and "LD" herein refer to the longitudinal direction, i.e, the direction of the film parallel to the path of extrusion. "T" and "TD" herein refer to the transverse direction, i.e. the direction of the film transverse to the path of extrusion.

"Linear low density polyethylene" (LLDPE) herein refers to polyethylene (ethylene/alpha-olefin copolymer) having a density from 0.916 to 0.925 grams per cubic centimeter.

"Linear medium density polyethylene" (LMDPE) herein refers to polyethylene having a density from 0.926 to 0.939 grams per cubic centimeter.

"Melt index" herein, with respect to ethylene polymers and copolymers, refers to ASTM D 1238-90, Condition 190°C/2.16 kilograms.

"Multicomponent ethylene/alpha-olefin interpenetrating network resin" or "IPN resin" herein refers to multicomponent molecular mixtures of polymer chains which are interfaced at a molecular level and are thus true solid state solutions, These become new compositions exhibiting properties distinct from parent constituents. IPN resins provide phase co-continuity leading to enhancement of physical properties, and may exhibit bimodal or multimodal curves when analyzed using TREF or CRYSTAF. "IPN resins" indudes semi-interpenetrating networks including crosslinked and uncrosslinked multicomponent molecular mixtures having a low density fraction and a high density fraction. Examples of IPN resins include ELITE™ resins from Dow.

"Olefinic polymer" herein refers to a polymer or copolymer that includes an olefinic moiety, or is derived at least in part from an olefinic monomer. Examples includes low density polyethylene, ethylene/alpha-olefin copolymer, ethylene/vinyl acetate copolymer, ethylene/acrylic acid copolymer, etc.

"Outer layer" herein refers to what is typically an outermost, usually surface layer or skin layer of a multi-layer film, although additional layers, coatings, and/or films can be adhered to it.

"Polymer" herein refers to homopolymer, copolymer, terpolymer, etc, "Copolymer" herein includes copolymer, terpolymer, etc,

"Solid state oriented" herein refers to films obtained by either co-extrusion or extrusion coating of the resins of different layers to obtain a primary thick sheet or tube (primary tape) that is quickly cooled to a solid state to quench (stop or slow) crystallization of the polymers, thereby providing a solid primary film sheet. The primary sheet is then reheated to the so-called orientation temperature, and thereafter biaxially stretched at the orientation temperature using either a tubular solid-state orientation process (for example a trapped bubble method) or using a flat solid-state orientation process (for example a simultaneous or sequential tenter frame), and finally rapidly cooled below the orientation temperature to provide a heat shrinkable film. In the trapped bubble solid state orientation process, the primary tape is stretched in the transverse direction (TD) by passing over an air bubble which is held between two rotating nip rolls, as well as stretched in the longitudinal direction (LD) by the differential speed between the two sets of nip rolls that contain the bubble. In the tenter frame process, the sheet or primary tape is stretched in the longitudinal direction by accelerating the sheet forward, while simultaneously or sequentially accelerating the sheet in the transverse direction by guiding the heat softened sheet through a diverging geometry frame. This tenter process typically refers to a flat sheet of relatively thick film. Solid state oriented films exhibit high free shrink when reheated to their orientation temperature.

"Styrene/butadiene/styrene block copolymer" (SBS) herein refers to a block copolymer formed from styrene and butadiene monomers. Techniques for manufacturing SBS materials are disclosed in US Patent No. 6,369,160 (Knoll et al.). One example of an SBS is STYROFLEX® 2G66 thermoplastic elastomer available from BASF. The styrene comonomer of the SBS can comprise from 60% to 80% by weight of the copolymer. All composltlonal percentages, including monomer percentages, used herein are presented on a "by weight" basis, unless designated otherwise. All film and sheet thicknesses designated in percentages are by percentage of total thickness of the film or sheet,

"Very low density polyethylene" and "ultra low density polyethylene" herein refer to polyethylene (ethylene/alpha-olefin copolymer) having a density of less than 0.916 grams per cubic centimeter.

### Brief Description of the Drawings

A detailed description of embodiments of the invention follows, with reference to the attached drawings, wherein:
FIG. 1 is a lay-flat view of a patch bag;
FIG. 2 is a cross-sectional view of the patch bag of Figure 1, taken through section 4-4 thereof;
FIG. 3 is a cross-sectional view of a patch of a patch bag of the invention;
FIG. 4 is a schematic of a film making process for making a patch in accordance with the invention; and
FIG. 5 is a schematic of a bag making process for making a bag in accordance with the invention.

### Detailed Description of the Invention

### Examples

The invention can be further understood by way of illustration by reference to the examples he rein.

Table 1 identifies the materials used in the examples. The remaining tables describe the formulations and/or properties of films, patches, and bags made with these materials.

**Table 1**

| Material Code | Tradename or Designation | Source |
|---|---|---|
| R1 | STYROFLEX™ 2G 66 | BASF |
| R2 | L-7106-AB™ | Bayshore Industrial |
| R3 | ECD 364™ | ExxonMobil |
| R4 | 80,820TCP™ | Teknor |
| R5 | MARFLEX™ D143 | Chevron Phillips |
| R6 | XUS 61520.15L™ | Dow |
| R7 | SC74836X™ | Voridian |
| R8 | ULTRAMID B35FN™ | BASF |
| R9 | GRIVORY™ G21 | EMS |
| R10 | HB50-011™ | ----- |
| R11 | PX3227™ | Equistar |
| R12 | 18042™ | Teknor |
| R13 | GRILON™ MB 3361 FS NATURAL | EMS |
| R14 | 1080864S™ | Clariant |
| R15 | ESCORENE™ LD 761.36 | ExxonMobil |
| R16 | AFFINITY™ PL 1280 | Dow |
| R17 | IT-202™ | Ingenia |
| R18 | LD-713.93 | ExxonMobil |
| R19 | SARAN™ 806 | Dow |
| R20 | AFFINITY™ PL 1850 | Dow |
| R21 | ESCORENE™ LL3003.32 | ExxonMobil |
| R22 | ATTANE™ 4203 | Dow |
| R23 | DOWLEX™ 2045.03 | Dow |
| R24 | EMAC SP 1305™ | Eastman |
| R25 | ELVAX™ 3165 | DuPont |
| R26 | AFFINITY™ PL 1850G | Dow |
| R27 | XUS61528.54 | Dow |

R1 is an styrene/butadiene/styrene block copolymer with a nominal melt flow rate of 12.5 g/10 minutes at 200°C / 5.00 kilograms (Condition G) and a Vicat Softening Point of 35°C.
R2 is a low density polyethylene-based color concentrate and antiblock masterbatch.
R3 is a linear, single site catalyzed ethylene/1-hexene copolymer with a density of 0.912 grams/cc, a melt index of 1,0.
R4 is a linear low density polyethylene-based color concentrate masterbatch.
R5 is a linear, single site catalyzed ethylene/1-hexene copolymer with a density of 0.916 grams/cc, a melt index of 1.3.
R6 is an ethylene/1-octene copolymer with a density of 0.903 grams/cc, a melt index of 0.5.
R7 is a linear polyethylene with a density of 0.926 grams/cc, and a melt index of 0.6.
R8 is a caprolactam (nylon 6).
R9 is an amorphous copolyamlde (nylon 6I/6T) derived from hexamethylenediamine, isophthalic acid, and terephthalic acid.
R10 is a nylon based antiblock masterbatch.
R11 is a blend of maleic anhydride-grafted polyethylene and linear low density polyethylene.
R12 is a linear low density polyethylene-based antiblock masterbatch.
R13 is a nylon 6 based slip and antiblock masterbatch.
R14 is a nylon:6 based slip and antiblock masterbatch.
R15 is an ethylene/vinyl acetate copolymer with more than 20 wt %, by weight of the copolymer, of vinyl acetate.
R16 is a branched, single site catalyzed ethylene/1-octene copolymer with a density of 0.9 grams/cc, a melt index of 0.9 grams/10 minutes.
R17 is an amide of erucic acid.
R18 is an ethylene/vinyl acetate copolymer with a vinyl acetate content of between 10% and 20 wt % by weight of the copolymer.
R19 is a vinylidene chloride/methyl acrylate copolymer.
R20 is a branched, single site catalyzed ethylene/1-octene copolymer with a density of 0,902 grams/cc, and a melt index of 3.0 grams/10 minutes.
R21 is a ethylene/1-hexene copolymer with a density of 0.9175 grams/cc, and a melt index of 3.2 grams/10 minutes.
R22 is a ethytene/1-octene copolymer with a density of 0.905 grams/cc, and a melt index of 0.8 grams/10 minutes.
R23 is an ethytene/1-octene copolymer with a density of 0.920 grams/cc, and a melt index of 1.1 grams/10 minutes.
R24 is an ethylene/methyl acrylate copolymer with a methyl acrylate content of between 10% and 20 wt % by weight of the copolymer.
R25 is an ethylen/vinyl acetate copolymer with a vinyl acetate content of 18 wt.% by weight of the copolymer.
R26 is a branched, single site catalyzed ethylene/1-octene copolymer with a density of 0.902 grams/cc, and a melt index of 3.0 grams/10 minutes.
R27 is an ethylene/1-octene copolymer with a density of 0.917 grams/cc, and a melt index of 0.5 grams/10 minutes, and a 1-octene content of 6.5% by weight of the copolymer.

### 1. Patch bag embodiments

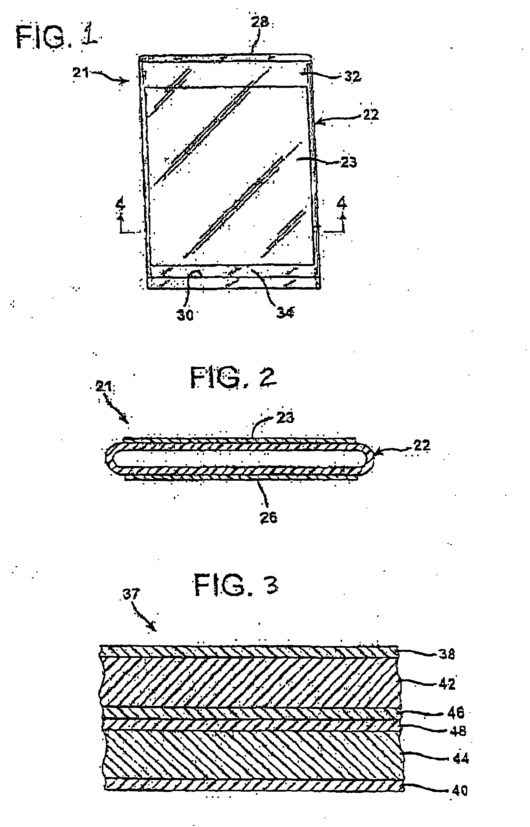

Figure 1 is a lay-flat view of an end-seal patch bag 21, in a lay-flat position, this patch bag being in accordance with the present invention. Figure 2 is a transverse cross-sectional view of patch bag 21, taken through section 4-4 of Figure 1. Viewing Figures 1 and 2 together, patch bag 21 comprises bag 22, first patch 23, second patch 26, open top 28, and end-seal 30.

Those portions of bag 21 to which patches 20 and 26 are adhered are "covered", f.e., protected, by patches 20 and 26, respectively. Upper and lower end portions 32 and 34 (respectively) of bag 22 are in one embodiment not covered by patch 23 or 26, for ease in producing end-seal 30, which is beneficially made before a product is placed in the bag, as well as a top-seal (not illustrated) which is beneficially made after a product is placed in the bag. Unless performed properly, heat-sealing through the bag and patch together can result in bum-through and/or a weaker seal.

Other forms of patches are well known in the art, and these formats can alternatively be used with the present invention. Examples of other patch formats and constructions that can be used in the present invention include those disclosed in US Patent No. 4,770,731 (Ferguson); US Patent No. 6,287,613 (Childress et al.)(directed to a patch bag, the patch having a homogeneous ethylene/alpha olefin copolymer); US Patent No. 6,383,537 (Brady et al,) (directed to a bag having overhanging bonded patches); US Patent No. 6,254,909 (Williams et al.) (directed to a bag having a side edge covered with a protective patch); US Patent No. 5,545,419 (Brady et al.) (directed to a patch bag having a supplemental seal); US Patent No. 6,270,819 (Wiese)(directed to a patch bag, the patch having a curved seal and curved patch); and US Patent No. 5,534,276 (Ennis)(directed to a reverse printed patch).

Figure 3 illustrates a schematic view of a film for use as the patch film in, for example, the patch bag illustrated in Figures 1 and 2. In Figure 3, multilayer film 37 has outer layers 38 and 40, intermediate layers 42 and 44, and self-weld layers 46 and 48.

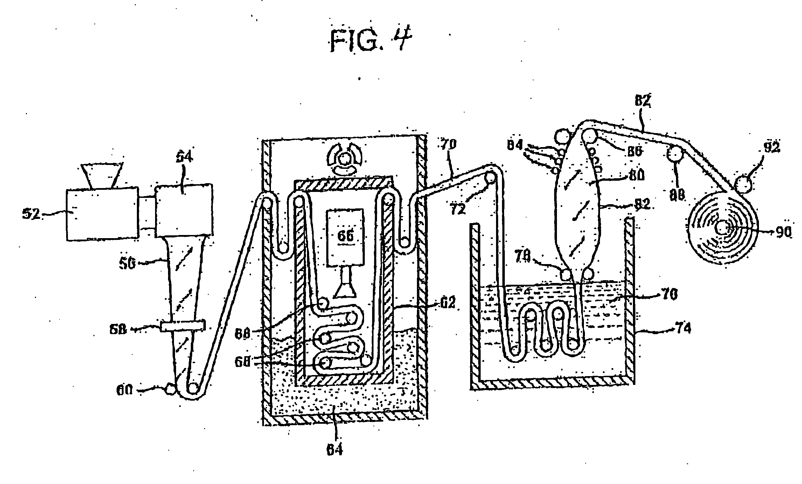

The multilayer film 37 thus is a film that can serve as e.g, a patch 23 or 26 for a patch bag such as that shown in Figures 1 and 2. Figure 4 illustrates a schematic of a process for producing the multilayer film for use in the patch in the patch bag of the present invention, e.g. the patch film illustrated in Figure 3. In the process illustrated in Figure 4, solid polymer beads (not illustrated) are fed to a plurality of extruders 52 (for simplicity, only one extruder is illustrated). Inside extruders 52, the polymer beads are forwarded, melted, and degassed, following which the resulting bubble-free melt is forwarded into die head 54, and extruded through annular die, resulting in tubing 56 which is 0.13-1.0 mm (5-40 mils) thick, e.g. 0.5-0.8 mm (20-30 mils) thick.

After cooling or quenching by water spray from cooling ring 58, tubing 56 is collapsed by pinch rolls 60 such that the innermost layers of the tubing (layers 46 and 48 in Figure 3) weld to one another, and is thereafter optionally fed through irradiation vault 62 surrounded by shielding 64, where tubing 56 is irradiated with high energy electrons (i.e., ionizing radiation) from iron core transformer accelerator 66. Tubing 56 is guided through irradiation vault 62 on rolls 68. The irradiation of tubing 56 can be at any suitable level, e.g. about 70 klloGrays.

After irradiation, irradiated tubing 70 is directed over guide roll 72, after which irradiated tubing 70 passes into hot water bath tank 74 containing hot water 76. The now collapsed irradiated tubing 70 is submersed in the hot water for a retention time of e.g. about 5 seconds, i.e., for a time period in order to bring the film up to the desired temperature, following which supplemental heating means (not illustrated) including a plurality of steam rolls around which irradiated tubing 70 is partially wound, and optional hot air blowers, can be used to elevate the temperature of irradiated tubing 70 to a desired orientation temperature, e.g. of from about 116-121°C (240°F to 250°F). One means for heating irradiated tubing 70 is with an infrared oven (not illustrated), by exposure to infrared radiation for about 3 seconds, also bringing the tubing up to about 116-121°C (240-250°F). Thereafter, irradiated film 70 is directed through nip rolls 78, and bubble 80 is blown, thereby transversely stretching irradiated tubing 70. Furthermore, while being blown, i.e., transversely stretched, irradiated film 70 is drawn (i.e., in the longitudinal direction) between nip rolls 78 and nip rolls 86, as nip rolls 86.have a higher surface speed than the surface speed of nip rolls 78. As a result of the transverse stretching and longitudinal drawing, irradiated, biaxially-oriented, blown tubing film 82 is produced, this blown tubing preferably having been both stretched at a ratio of from about 1;1,5 -1;6, and drawn at a ratio of from about 1:1.5-1:6, such as from about 1:2 -1:4. The result is a biaxial orientation of from about 1:2.25 - 1:36, such as 1:4 - 1:16. While bubble 80 is maintained between pinch rolls 78 and 86, blown tubing 82 is collapsed by rolls 84, and thereafter conveyed through nip rolls 86 and across guide roll 88, and then rolled onto wind-up roller90. Idler roll 92 assures a good wind-up,

Patch thicknesses can be varied, depending on process, end use application, etc. Typical thicknesses range from 0.03-0.20 mm (1 to 8 mils), such as 0.05-0.18 mm (2 to 7 mils), such as 0.08-0.15 mm (3 to 6 mils), such as 0.10-0.13 mm (4 to 5 mils), such as 0.11 mm (4.5 mils). The patch can be from 0.05-0.10 mm (2 to 4 mils) thick, and can be from 0.13-0.15 mm (5 to 6 mils) thick. The patch thickness can be greater than 0.13 mm (5 mils), and can be less than 0.10 mm (4 mils).

Patch films of the invention can have any haze (ASTM D 1003-97) value, such as from 0.1 to 25,1 1 to 18, 5 to 18, 6 to 18, 8 to 18, and 10 to 18. Film of the invention can have a haze value of less than 25, 20 or less than 20, 18 or-less than 18,16 or less than 16, 15 or less than 15,13 or less than 13, 10 or less than 10, or 1.

The multllayer patch film of the invention exhibits a free shrink (ASTM D 2732-83) at a temperature of 85°C (185°F) of at least 5% in either or both of the longitudinal and transverse directions, such as 8% in each of the longitudinal and transverse directions, such as 10% in each of the longitudinal and transverse directions. The multilayer film of the invention exhibits a free shrink (ASTM D 2732-83) at a temperature of 85°C (185°F) of at least 15% in either or both of the longitudinal and transverse directions, such as at least 20% in each of the longitudinal and transverse directions, such as 30% in each of the longitudinal and transverse directions, such as at least 40% in each of the longitudinal and transverse directions, such as at least 50% in each of the longitudinal and transverse directions. Examples of ranges for free shrink at a temperature of 85°C (185°F) are from 5% to 50% in each direction, such as from 10% to 45%, such as from 15% to 40% in either or both of the longitudinal and transverse directions, and such as from 18% to 30% in each of the longitudinal and transverse directions.

The mumiayer patch film of the invention exhibits an instrumented impact strength peak load value (ASTM D 3763) of e,g, from 200 N to 1200 N, such as from 250 N to 1100 N, from 300 N to 1000 N, from 400 N to 900 N, or from 500 N to 800 N. The multilayer film of the invention exhibits an instrumented impact strength peak load (ASTM D 3763) of at least 200 N, such as at least 250 N, at least 300 N, at least 350 N, at least 400 N, at least 450 N, and at least 500 N.

In patch films of the invention, the internal layer is disposed between the two outer layers. Optionally, one or more additional layers can be disposed during extrusion within the film structure, e.g. between the internal layer and one of the outer layers of a three layer film (thus providing a film of four or more layers), or between the internal layer and an intermediate layer, or between an intermediate layer and an outer layer of a five layer film (thus providing a film of six or more layers). These additional layers can comprise a polyamide or copolyamide. For example, two layers comprising polyamide can be included in the final patch, each polyamide layer adjacent a respective outermost layer. The outer layers of the patch can alternatively comprise polyester or copolyester, or ionomer, or polystyrene or styrenic copolymer.

Although not required to carry out this invention, the multilayer patch film of the invention may be crosslinked, such as by chemical means or by irradiation, especially by electron beam irradiation at a dosage of e.g. from 20 to. 250, such as from 40 to 225, from 50 to 200, or from 75 to 150 kiloGray. Although the patch films of the invention do not have to be irradiated, in one embodiment, irradiation can be used to improve processing of the film. Crosslinking may be enhanced by incorporating a crosslinking promoter, such as ethylene/propylene/diene terpolymer, into one or more patch film layers, in the manner disclosed in US Patent No. 5,993,922 (Babrowicz et al.) .

The crosslink promoter may be added to either the skin layers and/or the substrate layers. Patch films of the invention can be made by any suitable process, such as extrusion, coextrusion, lamination, or extrusion coating. Following extrusion, the film is cooled to a solid state by, for example, cascading water, chilled water bath, chilled metal roller, or chilled air quenching. For some structures a precursor film layer or layers may be formed by extrusion with additional layers thereafter being extrusion coated thereon to form multi-layer patch films. Multilayer tubes may also be formed with one of the tubes thereafter being coated or extrusion laminated onto the other.

Patch films of the invention can be subjected to an energetic radiation treatment, including, but not limited to corona discharge, plasma, flame, ultraviolet, and high energy electron treatment irradiation with ultraviolet or high energy electron treatment may be carried out in.such a manner as to produce a crosslinked polymer network. Irradiation can be performed prior to or after any orientation step. Electronic radiation dosages, by e,g. electron beam irradiation, can be from 10 to 200 kiloGray, such as from 15 to 150, 20 to 150, or 20 to 100 klloGray. Ntematively, crosslinking can be accomplished by chemical means.

The SBS can comprise 100% of the layer in which it is present, or it may be present in a blend with at least one other thermoplastic homopolymer.or copolymer, Examples of thermoplastic homopolymer or copolymers suitable for blending with SBS are styrene-based polymers and copolymers of polystyrene: general purpose polystyrene (GPPS)(also known as crystalline polystyrene), syndiotactic polystyrene, crystalline polystyrene, high impact polystyrene (HIPS), styrene-ethylene-styrene copolymer (SES), styrene-isoprene-butadiene-styrene (SIBS), styrene-ethylene-butadiene-styrene (SEBS), and styrene/acrylate copolymers such as styrene/methyl methacrylate copolymer (SMMA). Alpha-olefin based polymers and/or copolymers, such as ethylene/alpha-olefin copolymer, can also be used as blending materials.

The styrene/butadiene/styrene block copolymer, of the invention can have a melt mass flow index of from 2 to 12 gms/10 minutes at 200°C/5.00 kilograms, such as from 4 to 10, or 5 to 7 gms/10 minutes.

The styrene/butadiene/styrene block copolymer of the invention can have a styrene content of from 50% to 90% by weight of the copolymer, such as from 55% to 85%, 60% to 80%, or 65% to 75%, of styrene by weight of the copolymer.

Alternative SBS materials include STYROLUX™ from BASF; VECTOR™ from Dexco Polymers; K-RESIN™ styrene/butadiene copolymer from Chevron Phillips Chemical; and KRATON™ styrene/butadiene copolymer from Kraton Polymers.

Patch films of the invention are typically three or more layers with the SBS placed in the internal and/or intermediate positions. The SBS can comprise at least 5%, such as at least 10%, or at least 15%, of the film thickness. The SBS can comprise from 5% to 80%, such as from 5% to 10%, 10% to 70%, from 15% to 50%, or from 20 to 30%, of the film thickness. The SBS can comprise from 5% to 14% of the overall patch thickness, such as 8% to 12% of the overall patch thickness. The SBS can comprise greater than 20% of the film thickness.

Outer layers each comprise an olefinic polymer such as ethylene/alpha olefin copolymer, homogeneous ethylene/alpha olefin copolymer, ethylene/vinyl acetate copolymer, ethylene/alkyl acrylate copolymer, ethylene/acrylic acid copolymer, ionomer, propylene homopolymer and copolymer, butylene polymer and copolymer, multi-component ethylene/alpha-olefin interpenetrating network resin, a blend of a propylene homopolymer and a propylene/ethylene copolymer, high density polyethylene, a blend of high density polyethylene and ethylene/vinyl acetate copolymer, a blend of high density polyethylene and low density polyethylene; or a blend of any of these materials. The ethylene/alpha-olefin copolymer can have a density of from 0.86 to 0.96, such as from 0.89 to 0.94, from 0.90 to 0.93, or from 0.900 to 0.915 grams/cubic centimeter. The ethylene/alpha-olefin copolymer of the outer layers can have a density of less than 0.912 grams/cubic centimeter, such as between 0.86 and 0.910 grams/cubic centimeter. The olefinic polymer of the outer layers can have a density of less than 0.910, or greater than 0.920 grams/cubic centimeter.

Aftematively, the outer layers can comprise a polyamide, polyester or copolyester, polystyrene homopolymer or copolymer.

Outer layers can be identical, or can differ from each other in composition (such as the difference created by the presence or amount of a blend of two or more resins), one or more physical properties, amount or type of additives.

Intermediate layers each compdse an ethylene copolymer having a melt index less than 4.0, such as ethylene/alpha olefin copolymer, homogeneous ethylene/alpha olefin copolymer, ethylene/vinyl acetate copolymer, ethylene/alkyl acrylate copolymer, ethylene/acrylic acid copolymer, ionomer, propylene homopolymer and copolymer, butylene polymer and copolymer, multi-component ethylene/alpha-olefin interpenetrating network resin, a blend of a propylene homopolymer and a propylene/ethylene copolymer, high density polyethylene, a blend of high density polyethylene and ethylene/vinyl acetate copolymer, a blend of high density polyethylene and low density polyethylene; or a blend of any of these materials. The ethylene/alpha-olefin copolymer can have a density of from 0.86 to 0.96, such as from 0.89 to 0.94, from 0.90 to 0.93, or from 0.900 to 0.915 grams/cubic centimeter. Alternatively, the intermediate layers can comprise a polyamide, polyester or copolyester, polystyrene homopolymer or copolymer,

The SBS of the internal layer can be e.g. a styrene-based thermoplastic elastomer sold as STYROFLEX® 2G66 from BASF. Optionally, the SBS can be blended with one or more additional polymers to provide a blended core layer to further enhance film properties and characteristics (example: modulus). Examples of blending polymers are a styrene-based derivative copolymer, e,g. crystalline polystyrene or high impact polystyrene (HIPS). Alpha-olefin based polymers and/or copolymers could also be utilized as blending polymers.

The internal layer can comprise at least 5% of the total thickness of the film, such as at least 8%, at least 10%, at least 15%, or at least 20% of the total thickness of the film.

The patch can optionally be pigmented.

The patch can be produced as a clear patch or an opaque patch.

### Patch bag examples

| Ex.1 | Layer 1 | Layer 2 | Layer 3 | Layer 4 | Layer 5 | |
|---|---|---|---|---|---|---|
| % of total | 21.25% | 21.25% | 15% | 21.25% | 21.25% | |
| | 5% R2 | R3 | R1 | R3 | 5% R2 | |
| | 95% R3 | | | | 95% R3 | |
| Fin. mm | 0.024 | 0.024 | 0.017 | 0.024 | 0.024 | 0.11 |
| Fin. mils | 0.955 | 0.955 | 0.68 | 0.955 | 0.955 | 4.5 |

| Comparative Ex. 2 | Layer 1 | Layer 2 | Layer 3 | Layer 4 | Layer 5 | |
|---|---|---|---|---|---|---|
| % of total | 21.25% | 21.25% | 15% | 21.25% | 21.25% | |
| | 5% R2 | R3 | R15 | R3 | 5% R2 | |
| | 95% R3 | | | | 95% R3 | |
| Fin. mm | 0.024 | 0.024 | 0.017 | 0.024 | 0.024 | 0.11 |
| Fin. mils | 0.955 | 0.955 | 0.68 , | 0.955 | 0.955 | 4.5 |

| Ex. 3 | Layer 1 | Layer 2 | Layer 3 | Layer 4 | Layer 5 | |
|---|---|---|---|---|---|---|
| % of total | 12.50% | 30% | 15% | 30% | 12.50% | |
| | 10.5% R4 | 80% R5 | R1 | 80% R5 | 10.5% R4 | |
| | 89.5% R3 | 20% R6 | | 20% R6 | 89.5% R3 | |
| Fin. mm | 0.014 | 0.034 | 0.017 | 0.034 | 0.014 | 0.11 |
| Fin. mils | 0.56 | 1.35 | 0.68 | 1.35 | 0.56 | 4.5 |

| Ex. 4 | Layer 1 | Layer 2 | Layer 3 | Layer 4 | Layer 5 | |
|---|---|---|---|---|---|---|
| % of total | 21.25% | 21.25% | 15% | 21.25% | 21.25% | |
| | R7 | R7 | R1 | R7 | R7 | |
| Fin. mm | 0.024 | 0.024 | 0.017 | 0.024 | 0.024 | 0.11 |
| Fin. mils | 0.955 | 0.955 | 0.68 | 0.955 | 0.955 | 4.5 |

| Comparative Ex 5 | Layer 1 | Layer 2 | Layer 3 | layer 4 | Layer 5 | |
|---|---|---|---|---|---|---|
| % of total | 21.25% | 21.25% | 15% | 21.25% | 21.25% | |
| | R7 | R7 | R15 | R7 | R7 | |
| Fin. mm | 0.024 | 0.024 | 0.017 | 0.024 | 0.024 | 0.11 |
| Fin. mils | 0.955 | 0.955 | 0.68 | 0.955 | 0.955 | 4.5 |

| Ex.6 | Layer 1 | Layer 2 | Layer 3 | Layer 4 | Layer 5 | Layer 6 | Layer 7 | |
|---|---|---|---|---|---|---|---|---|
| % of total | 16.65% | 1.85% | 24% | 15% | 24% | 1.85% | 16.65% | |
| | 78% R8 | R11 | R7 | R1 | R7 | R11 | 78% R8 | |
| | 20% R9 | | | | | | 20% R9 | |
| | 2% R10 | | | | | | 2% R10 | |
| Fin. mm | 0.019 | 0.002 | 0.027 | 0.017 | 0.027 | 0.002 | 0.019 | 0.11 |
| Fin. mils | 0.75 | 0.085 | 1.08 | 0.68 | 1.08 | 0.085 | 0.75 | 4.51 |

| Ex. 7 | Layer 1 | Layer 2 | Layer 3 | Layer 4 | Layer 5 | Layer 6 | Layer 7 | |
|---|---|---|---|---|---|---|---|---|
| % of total | 16.65% | 1.85% | 24% | 15% | 24% | 1.85% | 16.65% | |
| | 96% R8 | R11 | R7 | R1 | R7 | R11 | 86% | R8 |
| | 2% R13 | | | | | | 2% R13 | |
| | 2% R14 | | | | | | 2% R14 | |
| Fin. mm | 0.019 | 0.002 | 0.027 | 0.017 | 0.027 | 0.002 | 0.019 | 0.11 |
| Fin. mils | 0.75 | 0.085 | 1.08 | 0.68 | 1.08 | 0.085 | 0.75 | 4.51 |

| Ex. 8 | Layer 1 | Layer 2 | Layer 3 | Layer 4 | Layer 6 | |
|---|---|---|---|---|---|---|
| % of total | 12.50% | 30.00% | 15% | 30.00% | 12.50% | |
| | 5% R2 | 80% R5 | R1 | 80% R5 | 5% R2 | |
| | 95% R3 | 20% R6 | | 20% R6 | 95% R3 | |
| Fin. mm | 0.014 | 0.034 | 0.017 | 0.034 | 0.014 | 0.11 |
| Fin. Mils | 0.56 | 1.35 | 0.68 | 1.35 | 0.56 | 4.6 |

| Ex. 9 | Layer 1 | Layer 2 | Layer 3 | Layer 4 | Layer 5 | |
|---|---|---|---|---|---|---|
| % of total | 12.50% | 30% | 15% | 30% | 12.50% | |
| | 8.5% R12 | 80% R5 | R1 | 80% R5 | 8.5% R12 | |
| | 91.5% R3 | 20% R6 | | 20% R6 | 91.5% R3 | |
| Fin. mm | 0.014 | 0.034 | 0.017 | 0.034 | 0.014 | 0.11 |
| Fin. Mils | 0.56 | 1.35 | 0.68 | 1.35 | 0.56 | 4.5 |

| Comparative Ex.10 | Layer 1 | Layer 2 | Layer 3 | Layer 4 | Layer 5 | |
|---|---|---|---|---|---|---|
| % of total | 12.50% | 30% | 15% | 30% | 12.50% | |
| | 8.5% R12 | 80% R5 | R15 | 80% R5 | 8.5% R12 | |
| | 91.5% R3 | 20% R6 | | 20% R6 | 91.5% R3 | |
| Fin. mm | 0.014 | 0.034 | 0.017 | 0.034 | 0.014 | 0.11 |
| Fin. Mils | 0.56 | 1.35 | 0.68 | 1.35 | 0.56 | 4.5 |

| Ex.11 | Layer 1 | Layer 2 | Layer 3 | Layer 4 | Layer 6 | |
|---|---|---|---|---|---|---|
| % of total | 21.25% | 30.00% | 15% | 21.25% | 21.25% | |
| | 8.5% R12 | R3 | R1 | R3 | 8.5% R12 | |
| | 91.5% R3 | | | | 91.5% R3 | |
| Fin. mm | 0.014 | 0.034 | 0.017 | 0.034 | 0.014 | 0.11 |
| Fin. Mils | 0.56 | 1.35 | 0.68 | 1.35 | 0.58 | 4.5 |

| Ex.12 | Layer 1 | Layer 2 | Layer 3 | Layer 4 | Layer 5 | |
|---|---|---|---|---|---|---|
| % of total | 21.25% | 30.00% | 15% | 21.25% | 21.25% | |
| | 10.5% R4 | R3 | R1 | R3 | 10.5% R4 | |
| | 89.5% R3 | | | | 89.5% R3 | |
| Fin. mm | 0.014 | 0.034 | 0.017 | 0.034 | 0.014 | 0.11 |
| Fin. Mils | 0.56 | 1.35 | 0.68 | 1.35 | 0.56 | 4.5 |

Notes on the Examples:
1. The Examples and Comparative Examples were irradiated by electron beam at a dose of 98 kGy.
2. "% of total" is the % of total thickness of the film for each designated layer.
3. 1 mil = 0.001 inches = 25.4 micrometers. Layer gauges are expressed in mils and mm.
4. "Fin. mils" refers to the thickness, in mils, of each layer of the extruded material after electronic irradiation, and after solid state orientation, "Fin.mm" refers to the thickness in mm
5. The total extruded thickness and finished thickness of each example is shown in the column farthest to the right in each example.
6. Each of the films of the Examples and the comparative Examples were extruded as a tubular extrudate. In each of the Examples, R1 formed the innermost layer of the tubular extrudate, and the annular extrudate was collapsed on itself at the R1 interface to create the structures shown in the Examples. In each of Comparative Examples, R15 formed the innermost layer of the tubular extrudate, and the annular extrudate was collapsed on itself at the R16 interface to create the structures shown in the Comparative Examples.

Each of the Examples and Comparative Examples are patch structures. These were produced (see Figure 4) by annular coextrusion of the structure; quenching of the coextrudate; reheating of the coextrudate to its orientation temperature; and trapped bubble orientation of the reheated structure. Each patch example was adhered to a commercial bag and evaluated. The bag construction was in each case as follows:

| | Substrate | | | Extrusion Coat | | | | Total |
|---|---|---|---|---|---|---|---|---|
| | Layer 1 | Layer 2 | Layer 3 | Layer 4 | Layer 5 | Layer 6 | Layer 7 | |
| | 90% R16 | R3 | R18 | R19 | R15 | R3 | 80% R26 | |
| | 10% R17 | | | | | | 20% R27 | |
| Fin. mm | 0.012 | 0.028 | 0.003 | 0.0046 | 0.003 | 0.007 | 0.0046 | 0.061 |
| Fin. Mils | 0.46 | 1.11 | 0.1 | 0.18 | 0.1 | 0.28 | 0.18 | 2.39 |

The bag was made by conventional bag making techniques from an extrusion coated film structure made by a process as discussed below with respect to examples 13 and 14 of the invention.

Performance of some of the patch examples is shown below in Table 2.

**Table 2**

| Patch Example | Peak, N | ETB, J | KN/mml (N/mil) | J/mml (J/mil) | Mils | mm |
|---|---|---|---|---|---|---|
| | | | | | | |
| Ex. 1 | 629.27 | 10.07 | 5.3 (136) | 87 (2.2) | 4.63 | 0.118 |
| Comp. Ex. 2 | 596.84 | 9.19 | 5.5 (140) | 87 (2.2) | 4.26 | 0.108 |
| | | | | | | |
| Ex. 4 | 420.27 | 5.43 | 4.2 (106) | 54 (1.36) | 3.98 | 0.101 |
| Comp. Ex. 5 | 222.11 | 2.59 | 4.0 (102) | 47 (1.19) | 2.18 | 0.055 |
| | | | | | | |
| Ex. 9 | 658.99 | 9.18 | 5.4 (138) | 75 (1.9) | 4.77 | 0.121 |
| Composition.Ex. 10 | 538.41 | 7.04 | 4.5 (114) | 59 (1.5) | 4.71 | 0.120 |

Notes on Table 3:
1. "peak" refers to peak load measured in Newtons via Instrumented Impact (ASTM D3763).
2. "ETB" refers to energy to break the specimen measured in Joules via Instrumented ImpaCt
3. "KN/mm (N/mil)" refers to normalized peak load by gauge.
4. "J/mm (J/mil)" refers to normalized energy to break.
It should be noted that the data of Table 3 reflects physical properties of the patch material itself, not the patch attached to a bag.

In contrast, tests of patch + bag samples were conducted for patch bags using the patches of Example 9 and Comparative Example 10 respectively, with the following resuits.

**Table 3**

| Patch Example | Peak, N | ETB, J | KN/mml (N/mil) | J/mml (J/mil) | Mils | mm |
|---|---|---|---|---|---|---|
| Ex.9 | 889 | 12.22 | 5.1 (130) | 70 (1.79) | 6.83 | 0.17 |
| Comparative Ex. 10 | 882 | 11.38 | 4.9 (124) | 63 (1.6) | 7.11 | 0.18 |

**Table 4**

| Patch Example | Patch | Abuse Related Failures, % | Seal Related Failures, % | Total Related Failures, % | Total Packages |
|---|---|---|---|---|---|
| Ex. 9 | | 1.7 | 0.0 | 1.8 | 545 |
| Comparative Ex.10 | | 3.1 | 0.3 | 4.3 | 391 |

### 3. Bag embodiments

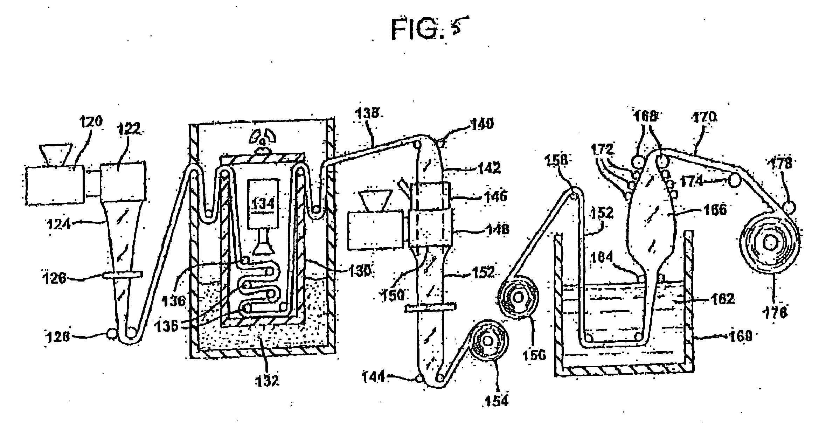

Figure 5 illustrates a schematic of a process for producing a multilayer film that can be made into a bag of the invention. In the process illustrated in Figure 5, solid polymer beads (not illustrated) are fed to a plurality of extruders 120 (for simplicity, only one extruder is illustrated). Inside extruders 120, the polymer beads are forwarded, melted, and degassed, following which the resulting bubble-free melt is forwarded into die head 122, and extruded through an annular die, resulting in tubing 124 which is 0.25 to 0.76 mm (10 to 30 mils) thick, e.g. 0.38 to 0.64 mm (15 to 25 mils) thick.

After cooling or quenching by water spray from cooling ring 126, tubing 124 is collapsed by pinch rolls 128, and is thereafter optionally fed through irradiation vault 130 surrounded by shielding 132, where tubing 124 is irradiated with high energy electrons (i.e., ionizing radiation) from Iron core transformer accelerator 134. Tubing 124 is guided through irradiation vault 130 on rolls 136. Tubing 124 can be irradiated to any suitable level, e.g. about 40 kiloGrays.

After irradiation, irradiated tubing 138 is directed through nip rolls 140, following which tubing 138 is slightly Inflated, resulting in trapped bubble 142. However, at trapped bubble 142, the tubing is not significantly drawn longitudinally, as the surface speed of nip rolls 144 are about the same speed as nip rolls 140, Furthermore, irradiated tubing 138 is inflated only enough to provide a substantially circular tubing without significant transverse orientation, i.e., without stretching.

Slightly inflated, irradiated tubing 138 is passed through vacuum chamber 146, and thereafter forwarded through coating die 148. Second tubular film 150 is melt extruded from coating die 148 and coated onto slightly inflated, irradiated tube 138, to form two-ply tubular film 152. Second tubular film 150 preferably includes an O₂-barrier layer, which does not pass through the ionizing radiation. Further details of the above-described coating step are generally as set forth in U.S. Patent No. 4,278,738, to Brax et. al..

After irradiation and coating, two-ply tubing film 152 is wound up onto windup roll 154. Thereafter, windup roll 154 is removed and installed as unwind roll 156, on a second stage in the process of making the tubing film as ultimately desired. Two-ply tubular film 152, from unwind roll 156, is unwound and passed over guide roll 158, after which two-ply tubular film 152 passes into hot water bath tank 160 containing hot water 162. The now collapsed, irradiated, coated tubular film 152 is submersed in hot water 162 (having a temperature of about 99°C (210°F)) for a retention time of e.g. about 5 seconds, i.e., for a time period in order to bring the film up to the desired temperature, for biaxial orientation. Thereafter, irradiated tubular film 152 is directed through nlp rolls 164, and bubble 166 is blown, thereby transversely stretching tubular film 152. Furthermore, while being blown, i.e., transversely stretched, nip rolls 168 draw tubular film 152 in the longitudinal direction, as nip rolls 168 have a surface speed higher than the surface speed of nip rolls 164, As a result of the transverse stretching and longitudinal drawing, irradiated, coated biaxially-oriented blown tubing film 170 is produced, this blown tubing preferably having been both stretched in a ratio of from about 1:1.5 -1:6, and drawn in a ratio of from about 1:1.5-1:6. The stretching and drawing are each performed a ratio of e.g, from about 1:2 - 1:4. The result is a biaxial orientation of from about 1:2.25 - 1:36, e.g., 1:4 - 1:16, While bubble 166 is maintained between pinch rolls 164 and 168, blown tubing film 170 is collapsed by rolls 172, and thereafter conveyed through nip rolls 168 and across guide roll 174, and then rolled onto wind-up roll 176. Idler roll 178 assures a good wind-up.

The stock film from which the bag is formed can have a total thickness of from 0.038 to 0.13 mm (about 1.5 to 5 mils), such as about 0.064 mm (2.5 mils). The stock film from which the bag is formed is a multilayer film having from 3 to 7 layers, e.g. 4 layers.

The bag of the invention can have any haze (ASTM D 1003-97) value, such as from 0.1 to 20, 1 to 18, 2 to 15, 3 to 12, and 5 to 10. Film of the invention can have a haze value of less than 20,15 or less than 15, 10 or less than 10, 5 or less than 5, or 1,

The multilayer bag of the invention exhibits a free shrink (ASTM D 2732-83) at a temperature of 58°C (185°F) of at least 5% in either or both of the longitudinal and transverse directions, such as at least 10% in both the longitudinal and transverse directions, such as 20% in both the longitudinal and transverse directions, such as at least 30% in both the longitudinal and transverse directions, such as at least 40% in both the longitudinal and transverse directions. Examples of ranges for free shrink at a temperature of 85°C (185°F) are from 5% to 60% in each direction, such as from 10% to 50%, such as from 20% to 55% in either or both of the longitudinal and transverse directions, and such as from 25% to 50% in both the longitudinal and transverse directions.

The bag of the invention exhibits an instrumented impact strength peak load value (ASTM D 3763) of from 100 N to 1200 N, such as from 150 N to 1000 N, from 200 N to 900 N,from 300 N to 800 N, or from 400 N to 600 N. The multilayer film of the invention exhibits an instrumented impact strength peak load (ASTM D 3763) of at least 100 N, such as at least 200 N, at least 300 N, at least 400 N, at least 450 N, and at least 500 N. Although not required to carry out this invention, the bag of the invention may be crosslinked, such as by chemical means or by irradiation, especially by electron beam irradiation at a dosage of e.g. from 10 to 250, such as from 40 to 225, from 45 to 200, or from 50 to 100 kiloGray. Although the patch films of the invention do not have to be irradiated, in one embodiment, irradiation can be used to improve processing of the film. Crosslinking may be enhanced by incorporating a crosslinking promoter, such as ethylene/propylaneldiene terpolymer, into one or more patch film layers, in the manner disclosed in US Patent No. 6,993,922 (Babrowicz et al.). The crosslink promoter may be added to either the skin layers and/or the substrate layers.

Two bag structures were made by an annular die/extrusion coating process as described herein, The bag formulations were as follows:

**Bag examples**

| Ex.13 | Substrate | | | Extrusion Coat | | | | Total |
|---|---|---|---|---|---|---|---|---|
| | Layer 1 | Layer 2 | Layer 3 | Layer 4 | Layer 5 | Layer 6 | Layer 7 | |
| | 90% R16 | 90% R6 | R18 | R19 | R1 | 80% R3 | R20 | |
| | 10% R17 | 10% R3 | | | | 20% R6 | | |
| Fin. mm | 0.012 | 0.022 | 0.003 | 0.005 | 0.003 | 0.007 | 0.005 | 0.056 |
| Fin. Mils | 0.48 | 0.86 | 0.1 | 0.19 | 0.1 | 0.29 | 0.19 | 2.21 |

| Ex.14 | Substrate | | | | | | | Total |
|---|---|---|---|---|---|---|---|---|
| | Layer 1 | Layer 2 Layer 3 | | Layer 4 | Layer 5 | Layer 6 | Layer 7 | |
| | 80% R16 | 80% R22 | R18 | F119 | R24 | R1 | 80% R20 | |
| | 20% R21 | 20% R23 | | | | | 20% R25 | |
| Fin. mm | 0.012 | 0.034 | 0.003 | 0.005 | 0.003 | 0.007 | 0.005 | 0.069 |
| Fin. Mils | 0.48 | 1.35 | 0.1 | 0.19 | 0.1 | 0.29 | 0.19 | 2.7 |

The bag of Example 13 is a proposed bag structure. The bag of Example 14 was made in accordance with the process described herein.

An alternative bag construction that can be made in accordance with the invention has the following formulation:

| Ex. 15 | Substrate | | | Extrusion Coat | | | | Total |
|---|---|---|---|---|---|---|---|---|
| | Layer 1 | Layer 2 | Layer 3 | Layer 4 | Layer 5 | Layer 6 | Layer 7 | |
| | 90% R16 | 80% R6 | R18 | R19 | R1 | 80% R6 | R20 | |
| | 10% R17 | 20% R3 | | | | 20% R3 | | |
| | 0.012 | 0.022 | 0.003 | 0.005 | 0.003 | 0.007 | 0.005 | 0.056 |
| Fin. Mils | 0.48 | 0.86 | 0.1 | 0.19 | 0.1 | 0.29 | 0.19 | 2.21 |

It is to be understood that variations of the invention can be made without departing from the scope of the invention, which is not limited to the specific embodiments and examples disclosed herein.

Although the patch of the patch bag, the bag of the patch bag, and the barrier bag embodiments are shown primarily as shrinkable materials, those of ordinary skill in the art will understand that non-shrinkable patch and bag can be alternatively used, although such non-shrinkable materials may be commercially unacceptable, or less acceptable, for some end use applications.

## Claims

1. A patch bag comprising:
a) a patch comprising a multilayer solid state oriented heat shrinkable film comprising;
i) an internal layer comprising a styrene/butadiene/styrene block copolymer; and
ii) a first and second outer layer each comprising an olefinic polymer;
wherein the film has a free shrink (ASTM D 2732) of at least 5% at 85°C (185°F) in at least one of the longitudinal and transverse directions; and
b) a bag having an outer surface, the bag comprising
i) an internal layer comprising an oxygen barrier having an oxygen transmission rate of no more than 100 cc/m²/24hr at 26°C, 0% RH, 1 atm (ASTM D 3985); and
ii) a first and second outer layer each comprising an olefinic polymer;
wherein the patch is adhered to the outer surface of the bag; and
wherein the patch has a thickness of from 0.025 to 0.10 mm (1 to 4 mils).

2. A patch bag comprising:
a) a patch comprising a multilayer solid state oriented heat shrinkable film comprising:
i) an internal layer comprising a stytene/butadiene/styrene block copolymer; and
ii) a first and second outer layer each comprising an olefine polymer;
wherein the film has a free shrink (ASTM D 2732) of at least 5% at 85°C (185°F) in at least one of the longitudinal and transverse directions; and
b) a bag having an outer surface, the bag comprising
i) an internal layer comprising an oxygen barrier having an oxygen transmission rate of no more than 100 cc/m²/24hr at 25°C, 0% RH, 1 atm (ASTM D 3985) ; and
ii) a first and second outer layer each comprising an olefinic polymer;
wherein the patch is adhered to the outer surface of the bag; and
wherein the internal layer of the patch comprising a styrene/butadiene/styrene block copolymer comprises from 5 to 14% of the total patch thickness.

3. A patch bag comprising:
a) a patch comprising a multilayer solid state oriented heat shrinkable film comprising:
i) an internal layer comprising a styrene/butadiene/styrone block copolymer;
ii) a first outer layer comprising an olefinic polymer; and
iii) a second outer layer comprising a polyamide;
wherein the film has a free shrink (ASTM D 2732) of at least 5% at 85°C (185°F) in at least one of the longitudinal and transverse dinactions; and
b) a bag having an outer surface, the bag comprising
i) an internal layer comprising an oxygen barrier having an oxygen transmission rate of no more than 100 cc/m²/24hr at 25°C, 0% RH,1 atm (ASTM D 3985) ; and
ii) a first and second outer layer each comprising an olefinic polymer;
wherein the patch is adhered to the outer surface of the bag.

4. The patch bag according to any of claims 1 to 3 wherein the styrene/butadiene/styrene block copolymer has a melt mass flow index of from 2 to 12 gms/10 minutes at 200°C/5.00 kilograms.

5. The patch bag according to either of claims 1 and 3 wherein the internal layer of the patch comprising a styrene/butadiene/styrene block copolymer comprises from 5 to 50% of the total patch thickness.

6. The patch bag according to any of claims 1 to 3 wherein the styrene/butadiene/styrene block copolymer of the patch comprises from 50% to 90%, by weight of the copolymer, of styrene.

7. The patch bag according to claim 1 or 2 wherein the first and second outer layer of the patch each comprise an olefinic polymer selected from the group consisting of ethylene/alpha olefin copolymer, ethylene/vinyl acetate copolymer, ethylene/alkyl acrylate copolymer, ethylene/acrylic add copolymer, ionomer, propylene homopolymer, propylene copolymer, butylene homopolymer and butylene copolymer, multicomponent ethylenelalpha-olefin interpenetrating network resin, a blend of a propylene homopolymer and a propylene/ethylene copolymer, high density polyethylene, a blend of high density polyethylene and ethylene/vinyl acetate copolymer, and a blend of high density polyethylene and low density polyethylene.

8. The patch bag according to any of claims 1 to 3 wherein the patch comprises a first and second intermediate layer, each intermediate layer comprising an ethylene copolymer having a melt index less than 4.0, the first and second intermediate layer disposed between the internal layer and the first and second outer layers respectively.

9. The patch bag according to claim 8 wherein the first and second intermediate layer of the patch each comprise a material selected from ethylene/alpha-olefin copolymer having a density of less than 0.930 grams/cubic centimeter, ethylene/vinyl acetate copolymer, ethylene/propylene/diene terpolymer, very low density polyethylene, a blend of very low density polyethylene and ethylene/vinyl acetate copolymer, and multicomponent ethylene/alpha-olefin interpenetrating network resin.

10. The patch bag according to any of claims 1 to 3 wherein the internal layer of the bag, comprising an oxygen barrier having an oxygen transmission rate of no more than 100 cc/m²/24hr at 25°C, 0% RH, 1 atm (ASTM D 3985), comprises a material selected from the group consisting of polyester, polyamide, ethylene vinyl alcohol copolymer, polyvinyl alcohol homopolymer, polyvinyl chloride, homopolymer and copolymer of polyvinylidene chloride, polyethylene naphthalate, polyacrylonitrile homopolymer and copolymer, liquid crystal polymer, SiOₓ, carbon, metal, and metal oxide.

11. The patch bag according to any of claims 1 to 3 wherein the first and second outer layer of the bag, comprising an olefinic polymer, comprises a material selected from the group consisting of ethylene/alpha olefin copolymer, ethylene/vinyl acetate copolymer, ethylene/alkyl acrylate copolymer, ethylene/acrylic acid copolymer, ionomer, propylene homopolymer, propylene copolymer, butylene homopolymer and butylene copolymer, multicomponent ethylene/alpha-olefin interpenetrating network resin, a blend of a propylene homopolymer and a propylene/ethylene copolymer, high density polyethylene, a blend of high density polyethylene and ethylene/vinyl acetate copolymer, and a blend of high density polyethylene and low density polyethylene.

## Patentansprüche

1. Patch-Beutel, der
a) einen Patch, der eine mehrschichtige, im festen Zustand orientierte, wärmeschrumpfbare Folie umfasst, die
i) eine Innenschicht, die Styrol/Butadien/Styrol-Blockcopolymer umfasst, und
ii) eine erste und zweite äußere Schicht umfasst, die jeweils ein olefinisches Polymer umfasst,
wobei die Folie eine freie Schrumpfung (gemäß ASTM D 2732) bei 85°C (185°F) von mindestens 5 % in mindestens einer von Längs- und Querrichtung aufweist, und
b) einen Beutel mit einer Außenseite umfasst, wobei der Beutel
i) eine Innenschicht, die eine Sauerstoffbarriere mit einer Sauerstoffdurchlässigkeit von nicht mehr als 100 cm³/m²/24 Stunden bei 25°C, 0 % RH, 1 atm (gemäß ASTM D 3985) umfasst, und
ii) eine erste und zweite äußere Schicht umfasst, die jeweils ein olefinisches Polymer umfasst,
wobei der Patch an die Außenseite des Beutels geklebt ist, und wobei der Patch eine Dicke von 0,025 bis 0,10 mm (1 bis 4 mil) aufweist.

2. Patch-Beutel, der
a) einen Patch, der eine mehrschichtige, im festen Zustand orientierte, wärmeschrumpfbare Folie umfasst, die
i) eine Innenschicht, die Styrol/Butadien/Styrol-Blockcopolymer umfasst, und
ii) eine erste und zweite äußere Schicht umfasst, die jeweils ein olefinisches Polymer umfasst,
wobei die Folie eine freie Schrumpfung (gemäß ASTM D 2732) bei 85°C (185°F) von mindestens 5 % in mindestens einer von Längs- und Querrichtung aufweist, und
b) einen Beutel mit einer Außenseite umfasst, wobei der Beutel
i) eine Innenschicht, die eine Sauerstoffbarriere mit einer Sauerstoffdurchlässigkeit von nicht mehr als 100 cm³/m²/24 Stunden bei 25°C, 0 % RH, 1 atm (gemäß ASTM D 3985) umfasst, und
ii) eine erste und zweite äußere Schicht umfasst, die jeweils ein olefinisches Polymer umfasst,
wobei der Patch an die Außenseite des Beutels geklebt ist, und wobei die Innenschicht des Patches Styrol/Butadien/Styrol-Blockcopolymer umfasst, das 5 bis 14 % der Gesamtdicke des Patches ausmacht.

3. Patch-Beutel, der
a) einen Patch, der eine mehrschichtige, im festen Zustand orientierte, wärmeschrumpfbare Folie umfasst, die
i) eine Innenschicht, die Styrol/Butadien/Styrol-Blockcopolymer umfasst,
ii) eine erste äußere Schicht, die olefinisches Polymer umfasst, und
iii) eine zweite äußere Schicht umfasst, die Polyamid umfasst,
wobei die Folie eine freie Schrumpfung (gemäß ASTM D 2732) bei 85°C (185°F) von mindestens 5 % in mindestens einer von Längs- und Querrichtung aufweist, und
b) einen Beutel mit einer Außenseite umfasst, wobei der Beutel
i) eine Innenschicht, die eine Sauerstoffbarriere mit einer Sauerstoffdurchlässigkeit von nicht mehr als 100 cm³/m²/24 Stunden bei 25°C, 0 % RH, 1 atm (gemäß ASTM D 3985) umfasst, und
ii) eine erste und zweite äußere Schicht umfasst, die jeweils ein olefinisches Polymer umfasst,
wobei der Patch an die Außenseite des Beutels geklebt ist.

4. Patch-Beutel nach einem der Ansprüche 1 bis 3, bei dem das Styrol/Butadien/Styrol-Blockcopolymer einen Schmelzmassen-Fließindex von 2 bis 12 Gramm/10 Minuten bei 200°C/5,00 kg aufweist.

5. Patch-Beutel nach einem der Ansprüche 1 und 3, bei dem die Styrol/Butadien/Styrol-Blockcopolymer umfassende Innenschicht des Patches 5 bis 50 % der Gesamtdicke des Patches ausmacht.

6. Patch-Beutel nach einem der Ansprüche 1 bis 3, bei dem das Styrol/Butadien/Styrol-Blockcopolymer des Patches 50 bis 90 Gew.-% des Copolymers an Styrol umfasst.

7. Patch-Beutel nach Anspruch 1 oder 2, bei dem die erste und zweite äußere Schicht des Patches jeweils olefinisches Polymer ausgewählt aus der Gruppe bestehend aus Ethylen/α-Olefin-Copolymer, Ethylen/Vinylacetat-Copolymer, Ethylen/AlkylacrylatCopolymer, Ethylen/AcrylsäureCopolymer, Ionomer, Propylenhomopolymer, Propylencopolymer, Butylenhomopolymer und Butylencopolymer, einander durchdringendem Mehrkomponenten-Ethylen/α-Olefin-Netzwerkharz, Gemisch aus Propylenhomopolymer und Propylen/Ethylen-Copolymer, Polyethylen hoher Dichte, Gemisch aus Polyethylen hoher Dichte und Ethylen/Vinylacetat-Copolymer und Gemisch aus Polyethylen hoher Dichte und Polyethylen niedriger Dichte umfasst.

8. Patch-Beutel nach einem der Ansprüche 1 bis 3, bei dem der Patch eine erste und zweite Zwischenschicht umfasst, wobei jede Zwischenschicht Ethylencopolymer mit einem Schmelzindex kleiner als 4,0 umfasst, wobei die erste und zweite Zwischenschicht zwischen der Innenschicht und der ersten beziehungsweise zweiten äußeren Schicht angeordnet sind.

9. Patch-Beutel nach Anspruch 8, bei dem die erste und zweite Zwischenschicht des Patches jeweils Material ausgewählt aus Ethylen/α-Olefin-Copolymer mit einer Dichte von weniger als 0,930 g/cm³, Ethylen/Vinylacetat-Copolymer, Ethylen/Propylen/Dien-Terpolymer, Polyethylen sehr niedriger Dichte, Gemisch aus Polyethylen sehr niedriger Dichte und Ethylen/Vinylacetat-Copolymer und einander durchdringendem Mehrkomponenten-Ethylen/α-Olefin-Netzwerkharz umfassen.

10. Patch-Beutel nach einem der Ansprüche 1 bis 3, bei dem die Innenschicht des Beutels, die eine Sauerstoffbarriere mit einer Sauerstoffdurchlässigkeit von nicht mehr als 100 cm³/m²/24 Stunden bei 25°C, 0 % RH, 1 atm (gemäß ASTM D 3985) umfasst, Material ausgewählt aus der Gruppe bestehend aus Polyester, Polyamid, Ethylen/Vinylalkohol-Copolymer, Polyvinylalkoholhomopolymer, Polyvinylchlorid, Homopolymer und Copolymer von Polyvinylidenchlorid, Polyethylennaphthalat, Polyacrylonitrilhomopolymer und -copolymer, Flüssigkristallpolymer, SiOₓ, Kohlenstoff, Metall und Metalloxid umfasst.

11. Patch-Beutel nach Anspruch 1 oder 3, bei dem die erste und zweite äußere Schicht des Beutels, die olefinisches Polymer umfasst, Material ausgewählt aus der Gruppe bestehend aus Ethylen/α-Olefin-Copolymer, Ethylen/Vinylacetat-Copolymer, Ethylen/Alkylacrylat-Copolymer, Ethylen/Acrylsäure-Copolymer, Ionomer, Propylenhomopolymer, Propylencopolymer, Butylenhomopolymer und Butylencopolymer, einander durchdringendem Mehrkomponenten-Ethylen/α-Olefin-Netzwerkharz, Gemisch aus Propylenhomopolymer und Propylen/Ethylen-Copolymer, Polyethylen hoher Dichte, Gemisch aus Polyethylen hoher Dichte und Ethylen/Vinylacetat-Copolymer und Gemisch aus Polyethylen hoher Dichte und Polyethylen niedriger Dichte umfasst.

## Revendications

1. Sac à pièce protectrice, qui comprend :
a) une pièce protectrice comprenant un film thermorétractable multicouche orienté à l'état solide, comportant :
i) une couche interne comprenant un copolymère à blocs poly(styrène/butadiène/styrène) ;
ii) et une première et une deuxième couches externes, comprenant chacune un polymère d'oléfine(s) ;
lequel film présente un taux de retrait libre (norme ASTM D-2732) à 85 °C (185 °F) d'au moins 5 %, dans l'une au moins des directions longitudinale et transversale ;
b) et un sachet présentant une surface externe, lequel sachet comprend :
i) une couche interne comprenant un matériau formant barrière à l'oxygène, que l'oxygène traverse à une vitesse d'au plus 100 cm³/m²/(24 heures) à 25 °C, en milieu à 0 % d'humidité relative et sous une pression de 1 atm (norme ASTM D-3985) ;
ii) et une première et une deuxième couches externes, comprenant chacune un polymère d'oléfine(s) ;
et dans lequel la pièce protectrice adhère à la surface externe du sachet, et a de 0,025 à 0,10 mm (1 à 4 millièmes de pouce) d'épaisseur.

2. Sac à pièce protectrice, qui comprend :
a) une pièce protectrice comprenant un film thermorétractable multicouche orienté à l'état solide, comportant :
i) une couche interne comprenant un copolymère à blocs poly(styrène/butadiène/styrène) ;
ii) et une première et une deuxième couches externes, comprenant chacune un polymère d'oléfine(s) ;
lequel film présente un taux de retrait libre (norme ASTM D-2732) à 85 °C (185 °F) d'au moins 5 %, dans l'une au moins des directions longitudinale et transversale ;
b) et un sachet présentant une surface externe, lequel sachet comprend :
i) une couche interne comprenant un matériau formant barrière à l'oxygène, que l'oxygène traverse à une vitesse d'au plus 100 cm³/m²/(24 heures) à 25 °C, en milieu à 0 % d'humidité relative et sous une pression de 1 atm (norme ASTM D-3985) ;
ii) et une première et une deuxième couches externes, comprenant chacune un polymère d'oléfine(s) ;
et dans lequel la pièce protectrice adhère à la surface externe du sachet, et la couche interne de la pièce protectrice, qui comprend un copolymère à blocs poly(styrène/butadiène/styrène), représente de 5 à 14 % de l'épaisseur totale de la pièce protectrice.

3. Sac à pièce protectrice, qui comprend :
a) une pièce protectrice comprenant un film thermorétractable multicouche orienté à l'état solide, comportant :
i) une couche interne comprenant un copolymère à blocs poly(styrène/butadiène/styrène) ;
ii) une première couche externe, comprenant un polymère d'oléfine(s) ;
iii) et une deuxième couche externe comprenant un polyamide ; lequel film présente un taux de retrait libre (norme ASTM D-2732) à 85 °C (185 °F) d'au moins 5 %, dans l'une au moins des directions longitudinale et transversale ;
b) et un sachet présentant une surface externe, lequel sachet comprend :
i) une couche interne comprenant un matériau formant barrière à l'oxygène, que l'oxygène traverse à une vitesse d'au plus 100 cm³/m²/(24 heures) à 25 °C, en milieu à 0 % d'humidité relative et sous une pression de 1 atm (norme ASTM D-3985) ;
ii) et une première et une deuxième couches externes, comprenant chacune un polymère d'oléfine(s) ;
et dans lequel la pièce protectrice adhère à la surface externe du sachet.

4. Sac à pièce protectrice, conforme à l'une des revendications 1 à 3, dans lequel le copolymère à blocs poly(styrène/butadiène/styrène) présente un indice de fluidité à chaud de 2 à 12 g/(10 minutes), à 200 °C et sous une charge de 5,00 kg.

5. Sac à pièce protectrice, conforme à l'une ou l'autre des revendications 1 et 3, dans lequel la couche interne de la pièce protectrice, qui comprend un copolymère à blocs poly(styrène/butadiène/styrène), représente de 5 à 50 % de l'épaisseur totale de la pièce protectrice.

6. Sac à pièce protectrice, conforme à l'une des revendications 1 à 3, dans lequel le copolymère à blocs poly(styrène/butadiène/styrène) de la pièce protectrice comprend de 50 à 90 % de motifs de styrène, par rapport au poids du copolymère.

7. Sac à pièce protectrice, conforme à la revendication 1 ou 2, dans lequel la première et la deuxième couches externes de la pièce protectrice comprennent chacune un polymère d'oléfine(s) choisi dans l'ensemble constitué par un copolymère d'éthylène et d'alpha-oléfine, un copolymère d'éthylène et d'acétate de vinyle, un copolymère d'éthylène et d'acrylate d'alkyle, un copolymère d'éthylène et d'acide acrylique, un ionomère, un homopolymère de propylène, un copolymère de propylène, un homopolymère de butylène, un copolymère de butylène, une résine d'éthylène et d'alpha-oléfine multicomposant à réseaux interpénétrants, un mélange d'un homopolymère de propylène et d'un copolymère d'éthylène et de propylène, un polyéthylène haute densité, un mélange d'un polyéthylène haute densité et d'un copolymère d'éthylène et d'acétate de vinyle, et un mélange d'un polyéthylène haute densité et d'un polyéthylène basse densité.

8. Sac à pièce protectrice, conforme à l'une des revendications 1 à 3, dans lequel la pièce protectrice comprend une première couche intermédiaire et une deuxième couche intermédiaire, chacune de ces couches intermédiaires comprend un copolymère d'éthylène présentant un indice de fluidité à chaud inférieur à 4,0, et ces première et deuxième couches intermédiaires sont disposées entre la couche interne et, respectivement, la première et la deuxième couches externes.

9. Sac à pièce protectrice, conforme à la revendication 8, dans lequel la première et la deuxième couches intermédiaires de la pièce protectrice comprennent chacune un matériau choisi parmi un copolymère d'éthylène et d'alpha-oléfine de masse volumique inférieure à 0,930 g/cm³, un copolymère d'éthylène et d'acétate de vinyle, un terpolymère d'éthylène, de propylène et de diène, un polyéthylène très basse densité, un mélange d'un polyéthylène très basse densité et d'un copolymère d'éthylène et d'acétate de vinyle, et une résine d'éthylène et d'alpha-oléfine multicomposant à réseaux interpénétrants.

10. Sac à pièce protectrice, conforme à l'une des revendications 1 à 3, dans lequel la couche interne du sachet, qui comprend un matériau formant barrière à l'oxygène et que l'oxygène traverse à une vitesse d'au plus 100 cm³/m²/(24 heures) à 25 °C, en milieu à 0 % d'humidité relative et sous une pression de 1 atm (norme ASTM D-3985), comprend un matériau choisi dans l'ensemble formé par un polyester, un polyamide, un copolymère d'éthylène et d'alcool vinylique, un homopolymère poly(alcool vinylique), un poly(chlorure de vinyle), un homopolymère poly(chlorure de vinylidène), un copolymère de chlorure de vinylidène, un poly(éthylène naphtalate), un homopolymère polyacrylonitrile, un copolymère d'acrylonitrile, un polymère cristal liquide, un matériau de formule SiOₓ, du carbone, un métal et un oxyde de métal.

11. Sac à pièce protectrice, conforme à l'une des revendications 1 à 3, dans lequel la première et la deuxième couches externes du sachet, qui comprennent un polymère d'oléfine(s), comprennent un matériau choisi dans l'ensemble constitué par un copolymère d'éthylène et d'alpha-oléfine, un copolymère d'éthylène et d'acétate de vinyle, un copolymère d'éthylène et d'acrylate d'alkyle, un copolymère d'éthylène et d'acide acrylique, un ionomère, un homopolymère de propylène, un copolymère de propylène, un homopolymère de butylène, un copolymère de butylène, une résine d'éthylène et d'alpha-oléfine multicomposant à réseaux interpénétrants, un mélange d'un homopolymère de propylène et d'un copolymère d'éthylène et de propylène, un polyéthylène haute densité, un mélange d'un polyéthylène haute densité et d'un copolymère d'éthylène et d'acétate de vinyle, et un mélange d'un polyéthylène haute densité et d'un polyéthylène basse densité.
